# EUROPÄISCHE PATENTSCHRIFT

(11) **EP 1 915 811 B1**
(45) Veröffentlichungstag und Bekanntmachung des Hinweises auf die Patenterteilung: **17.11.2010**
(21) Anmeldenummer: 06776838.2
(22) Anmeldetag: 14.08.2006
(51) Int. Cl.: H02K 5/136, H02K 11/04, H01R 13/631

(54) **MOTOR-SCHALTGERÄT-ANORDNUNG FÜR EINEN EINSATZ IN EXPLOSIONSGEFÄHRDETEN BEREICHEN**
MOTOR SWITCHING DEVICE ASSEMBLY FOR USE IN AREAS WITH A HIGH EXPLOSION RISK
SYSTEME DE DISPOSITIF DE COMMANDE DE MOTEUR, S'UTILISANT DANS DES ZONES EXPOSEES AUX EXPLOSIONS

(30) Priorität: 16.08.2005 DE 102005038679
(43) Veröffentlichungstag der Anmeldung: 30.04.2008
(73) Patentinhaber: BARTEC SICHERHEITS-SCHALTANLAGEN GMBH, 58708 Menden (DE)
(72) Erfinder: DURRANG, Siegfried, 65510 Hünstetten (DE); NIERHOFF, Reinhard, 58708 Menden (DE)
(74) Vertreter: Lehmann, Alexander
(86) Internationale Anmeldenummer: PCT/EP2006/008028
(87) Internationale Veröffentlichungsnummer: WO 2007/020040

(56) Entgegenhaltungen:
- EP-A1- 0 371 835
- DE-U1- 20 220 131
- DE-U1- 29 919 949
- US-A- 5 769 651

## Beschreibung

Die Erfindung betrifft eine Motor-Schaltgerät-Anordnung für einen Einsatz in explosionsgefährdeten Bereichen, insbesondere in schlagwettergefährdeter Atmosphäre, insbesondere im Bergbau unter Tage.

In den verschiedensten Arten des Bergbaus sowie in Industrieanlagen der Bereiche Chemie, Petrochemie, Raffinerie, Pharmazie, Umweltschutz, Energie, Anlagenbau, Nahrungsmittelindustrie und dergleichen kann es die unterschiedlichsten Arten von explosionsgefährdeten Bereichen geben. Explosionsgefahr kann in diesen Umgebungen beispielsweise durch sich entwickelnde oder austretende Gase und Dämpfe gegeben sein, die durch Funkenbildung bzw. heiße Oberflächen im Bereich elektrischer und/oder mechanischer Geräte und Maschinen zündfähig, brennbar und insbesondere explosionsfähig sind. Im Bereich des Bergbaus, insbesondere beim Untertage-Bergbau spricht man hierbei von Schlagwettergefahr. Zur Vermeidung einer Explosionsgefahr in diesen Umgebungen sind daher jeweils geeignete, den einschlägigen Vorschriften entsprechende Explosionsschutzmaßnahmen zu ergreifen und zu beachten.

Maßgeblich für den Explosionsschutz sind die Europäischen Richtlinien 94/9/EG (sogenannte ATEX-Richtlinie) und 1999/92/EG, die die Anforderungen an elektrische und nicht-elektrische Geräte und Schutzsysteme zur bestimmurigsgemäßen Verwendung in explosionsgefährdeten Bereichen für den Raum der Europäischen Union regeln. Ergänzend gibt es eine Vielzahl nationaler und europäischer Normen, die die diversen Aspekte des Explosionsschutzes regeln.

Im Bergbau werden verschiedenste Arten von Bergbaumaschinen eingesetzt, beispielsweise Vortriebs-, Abbau- und Fördermaschinen, die durch spezielle, für den Bergbau geeignete Motoren angetrieben werden. Die spezifischen Betriebsverhältnisse insbesondere beim Untertage-Bergbau stellen dabei an die eingesetzten Motoren hohe Anforderungen. Neben dem Explosionsschutz ist hierbei auf Grund der geringen und kostenintensiven Verfügbarkeit von Raum und Fläche unter Tage eine geringe Baugröße und kompakte Bauform der Motoren bei geringem Gewicht erforderlich. Häufig werden im Bergbau Drehstrom-Asynchronmotoren eingesetzt, die explosionsgeschützt ausgeführt sind, beispielsweise in der Zündschutzart "Druckfeste Kapselung". Die Motoren müssen die erforderlichen amtlichen Zulassungen haben, beispielsweise gemäß der oben genannten ATEX-Richtlinie.

Derartige Motoren werden typischerweise mittels Schaltgeräten und/oder Umrichtern gesteuert. Diese Komponenten weisen beispielsweise elektrische oder elektronische Schaltungen auf, über die der Motor ein- oder ausgeschaltet wird. Darüber hinaus können Stromrichter vorgesehen sein, die eine Drehzahlregelung des Motors ermöglichen. Diese Komponenten sind in einem Gehäuse untergebracht, das vorliegend als Schaltgerätgehäuse bezeichnet wird.

Für einen Einsatz im Bergbau unter Tage, bei dem mit schlagwettergefährdeter Atmosphäre zu rechnen ist, sind im Stand der Technik die Schaltgerätgehäuse typischerweise in die Motorgehäuse integriert, bzw. sind Motorgehäuse und Schaltgerätgehäuse/Umrichtergehäuse als eine Gehäusegesamteinheit ausgebildet, d.h. das Motorgehäuse kann in der Regel nicht von dem Schaltgerätgehäuse/Umrichtergehäuse gelöst oder getrennt werden. Eine derartige integrierte Motor-Schaltgerät-Kombination ist beispielsweise in der Veröffentlichung Antriebstechnik 39 (2000) Nr. 3 unter dem Titel "Variable Frequency Drive Motors for Coal Mining" beschrieben.

Diese integrierten, einstückigen Ausführungsformen haben den Nachteil, dass bei einem Ausfall oder Defekt entweder des Motors oder des Schaltgeräts bzw. Umrichters immer die gesamte Motor-Schaltgerät-Einheit ausgetauscht werden muss. Auf Grund der unlösbaren Gehäusekombination kann somit also nicht nur die ausgefallene Komponente alleine ausgetauscht werden, während die nicht fehlerbehaftete Komponente an Ort und Stelle verbleibt und weiterbetrieben wird.

Im Stand der Technik ist es daneben bekannt, den Motor einerseits und das Schaltgerät bzw. den Umrichter andererseits als zwei körperlich vollkommen voneinander getrennte Einheiten auszuführen. Hierbei sind die beiden Gehäuse somit nicht mechanisch miteinander verbunden, und sie können mit einem mehr oder weniger großen Abstand voneinander angeordnet sein. Die elektrische Koppelung zwischen Schaltgerät/Umrichter und Motor erfolgt hierbei über geeignete elektrische Verbindungs- und Leitungseinrichtungen, z.B. Kabel.

Bei dieser bekannten Ausführungsform können zwar die beiden Komponenten Motor und Schaltgerät/Umrichter im Falle eines Defekts oder Ausfalls einer der beiden Komponenten gesondert voneinander ausgetauscht bzw. betriebsbereit beibehalten werden. Diese Ausführungsform hat jedoch den Nachteil, dass sie einen hohen Platzbedarf hat, was bei den räumlich beengten Verhältnissen im Untertage-Bergbau unerwünscht ist. Darüber hinaus ist eine derartige Ausführungsform unter den Gesichtspunkten des Explosionsschutzes nachteilig, da sie zusätzliche Explosionsschutzeinrichtungen erfordert.

DE 299 19 549 U1 offenbart eine Motor-Schaltgerät-Anordung mit den Merkmalen des Oberbegriffs des Anspruchs 1.

Der Erfindung liegt somit die Aufgabe zugrunde, eine Motor-Schaltgerät/Umrichter-Anordnung für einen Einsatz in explosionsgefährdeten Bereichen, insbesondere in schlagwettergefährdeter Atmosphäre im Bergbau unter Tage, zu schaffen, die die oben genannten Nachteile überwindet. Eine derartige Anordnung soll insbesondere derart ausgestaltet sein, dass bei einem Ausfall einer der Funktionseinheiten nicht die gesamte Motor-Schaltgerät-Anordnung ausgetauscht werden muss, sondern nur die jeweils betroffene Komponente. Darüber hinaus soll eine kompakte Bauform und Baugröße realisiert werden, die insbesondere hinsichtlich ihres Platzbedarfs für einen Einsatz im Bergbau unter Tage geeignet ist. Des Weiteren muss die Motor-Schaltgerät-Anordnung die für einen Einsatz in explosionsgefährdeten Bereichen erforderlichen Explosionsschutzeinrichtungen aufweisen, wobei es wünschenswert ist, den diesbezüglich erforderlichen Aufwand bei einem Minimum zu halten.

Diese Aufgabe wird durch eine Motor-Schaltgerät-Anordnung gemäß Patentanspruch 1 gelöst.

Erfindungsgemäß ist somit eine Motor-Schaltgerät-Kombination vorgesehen, bei der das Motorgehäuse und das Schaltgerätgehäuse jeweils eigenständige Gehäuseeinheiten oder -module sind, die aber mechanisch zu einem Gehäusesystem zusammengefasst sind, wobei sie lösbar miteinander verbunden sind. Die Motor-Schaltgerät-Anordnung weist somit eine modulare Kombination von Motorgehäuse und Schaltgerätgehäuse auf. Die elektrische Verbindung des Motors mit dem Schaltgerät erfolgt erfindungsgemäß mittels einer schwimmend gelagerten Verbindungseinheit. Die Motor-Schaltgerät-Kombination hat in ihrer Gesamtheit damit eine kompakte Bauform mit geringen Abmessungen, was insbesondere im Bergbau unter Tage von Vorteil ist.

Die erfindungsgemäße Motor-Schaltgerät-Anordnung hat den Vorteil, dass bei einem Ausfall oder Defekt einer der beiden Funktionseinheiten Motor oder Schaltgerät/Umrichter nur die betroffene defekte Komponente auszutauschen ist, während die intakte, nicht betroffene Komponente an Ort und Stelle bleiben kann. Dieses vereinfacht die Handhabung der Motor-Schaltgerät-Anordnung und trägt zu einer beträchtlichen Kostenersparnis bei, da nur die tatsächlich defekte Komponente ausgetauscht wird.

Hinsichtlich der Fertigung der Motor-Schaltgerät-Kombination ergibt sich der Vorteil, dass beide Funktionseinheiten zeitgleich unabhängig voneinander hergestellt werden können, wodurch der Zeitaufwand für die Produktion des Gesamtsystems verringert wird. Auf Grund der modularen Ausführung können schließlich je nach Anwendungsfall und Einsatzbereich unterschiedliche Typen und Baugrößen von Motoren und Schaltgeräten/Umrichtem miteinander kombiniert werden. Dadurch erhöht sich der Einsatzbereich und die Flexibilität der Motor-Schaltgerät-Einheit.

Gemäß einer bevorzugten Ausführungsform der Erfindung weist das Motorgehäuse eine Trägervorrichtung für das Schaltgerätgehäuse auf, wobei Letzteres derart ausgebildet ist, dass es an der Trägervorrichtung anbringbar und insbesondere auf diese aufsetzbar oder aufschiebbar ist. Das Motorgehäuse und das Schaltgerätgehäuse können dabei Einrichtungen für eine Befestigung und Fixierung der beiden Gehäuseteile miteinander aufweisen, beispielsweise Einrichtungen für eine Verschraubung der beiden Gehäuse miteinander.

In einer bevorzugten Ausführungsform der Erfindung ist die schwimmend gelagerte Verbindungseinheit für die elektrische Verbindung von Motor und Schaltgerät eine sogenannte Steckverbindungseinheit oder eine sogenannte Kabeldurchführungseinheit. Die Verbindungseinheit ist insbesondere einseitig schwimmend gelagert, wobei beispielsweise ein erstes Teil der Verbindungseinheit schwimmend an dem Motorgehäuse oder einem geeigneten Anbau oder Anschlußteil des Motorgehäuses gelagert ist, während ein zweites Teil der Verbindungseinheit, das das Gegenstück zu dem ersten Teil bildet, feststehend an dem Schaltgerätgehäuse oder einem geeigneten Anbau oder Anschlußteil des Schaltgerätgehäuses angebracht ist. Alternativ kann das eine Teil der Verbindungseinheit schwimmend an dem Schaltgerätgehäuse oder in dessen Bereich gelagert sein, während das das Gegenstück bildende andere Teil der Verbindungseinheit feststehend an dem Motorgehäuse oder in dessen Bereich angebracht ist.

Als weitere Alternative kann die Verbindung zweiseitig schwimmend ausgeführt sein. In diesem Fall sind die betreffenden Teile der Verbindungseinheit schwimmend sowohl an dem Motorgehäuse als auch an dem Schaltgerätgehäuse gelagert.

Erfindungsgemäß ist die schwimmend gelagerte Verbindungseinheit explosionsgeschützt ausgeführt, wobei sie vorzugsweise die Zündschutzart "Druckfeste Kapselung" (Kennzeichnung "EEx d") aufweist. Hierbei verbleibt zwischen dem schwimmend gelagerten ersten Teil der Verbindungseinheit und dem das Lager bildenden Teil des Motorgehäuses ein Spalt, der eine für eine vorschriftsgemäße, explosionsgeschützte Ausführung erforderliche Spaltlänge und Spaltweite aufweist. Mittels des Spalts wird somit ein druckfester Abschluss gebildet, so dass ein Zünddurchschlag verhindert wird. Insbesondere wird ein Abschluss der Zündschutzart "Druckfeste Kapselung" gebildet. Es sind aber auch andere, für einen Explosionsschutz relevante Zündschutzarten möglich. Entsprechende Zündschutzarten und Abschlüsse können für den Motor und/oder das Schaltgerät gegeben sein. Beispielsweise können also der Motor und/oder das Schaltgerät druckfest gekapselt sein. Damit ist eine Wirkung der jeweiligen Zündschutzart bzw. des Abschlusses in beide Richtungen möglich.

Auf Grund der schwimmenden Lagerung des einen Teils der elektrischen Verbindungseinheit zwischen Motor und Schaltgerät können die beiden Verbindungsteile so zueinander ausgerichtet und miteinander verbunden werden, insbesondere ineinander eingeschoben werden, dass die gegebene Zündschutzart der Verbindungseinheit nicht aufgehoben, sondern beibehalten wird. Die über die schwimmend gelagerte Verbindungseinheit elektrisch miteinander verbundenen Gehäuse von Motor und Schaltgerät weisen somit den Charakter einer unlösbaren Einheit aus Motorgehäuse und Schaltgerätgehäuse auf.

Gemäß einer Ausführungsform der Erfindung ist die gesamte Motor-Schaltgerät-Einheit explosionsgeschützt ausgeführt, wobei sie vorzugsweise wiederum die Zündschutzart "Druckfeste Kapselung" (Kennzeichnung "EEx d") aufweist.

Neben den oben genannten Vorteilen hat die erfindungsgemäße Anordnung auf Grund der modularen Kombination der beiden Einzelgehäuse über die einseitig schwimmend gelagerte Verbindungseinheit den weiteren Vorteil, dass bezüglich Motor und/oder Schaltgerät und/oder Umrichter bestimmte bergbauspezifische Explosionsschutzmaßnahmen entfallen können. So kann beispielsweise bei einem drehzahlgeregelten Drehstromantrieb ein kostengünstiger Umrichter mit einem Standardmotor zu einer kompakten Funktionsgesamteinheit kombiniert werden.

Weitere Einzelheiten und Vorteile der Erfindung ergeben sich aus der nachfolgenden Beschreibung eines Ausführungsbeispiels der Erfindung anhand der beigefügten Zeichnungen.
- Fig. 1a: zeigt die erfindungsgemäße Motor-Schaltgerät-Anordnung in einer Draufsicht- von der Seite.
- Fig. 1b: zeigt die Motor-Schaltgerät-Anordnung aus Fig. 1a in einer Draufsicht von oben.
- Fig. 1c: zeigt die Motor-Schaltgerät-Anordnung aus Fig. 1a in einer Seitenansicht von rechts.
- Fig. 1d: zeigt die Motor-Schaltgerät-Anordnung aus Fig. 1a in einer Seitenansicht von links.
- Fig. 2a: zeigt die schwimmend gelagerte Verbindungseinheit in einem nicht zusammen- gefügten Zustand in einer vergrößerten Darstellung im Querschnitt.
- Fig. 2b zeigt: das Unterteil der Verbindungseinheit aus Fig. 2a in einer Seitenansicht von rechts.

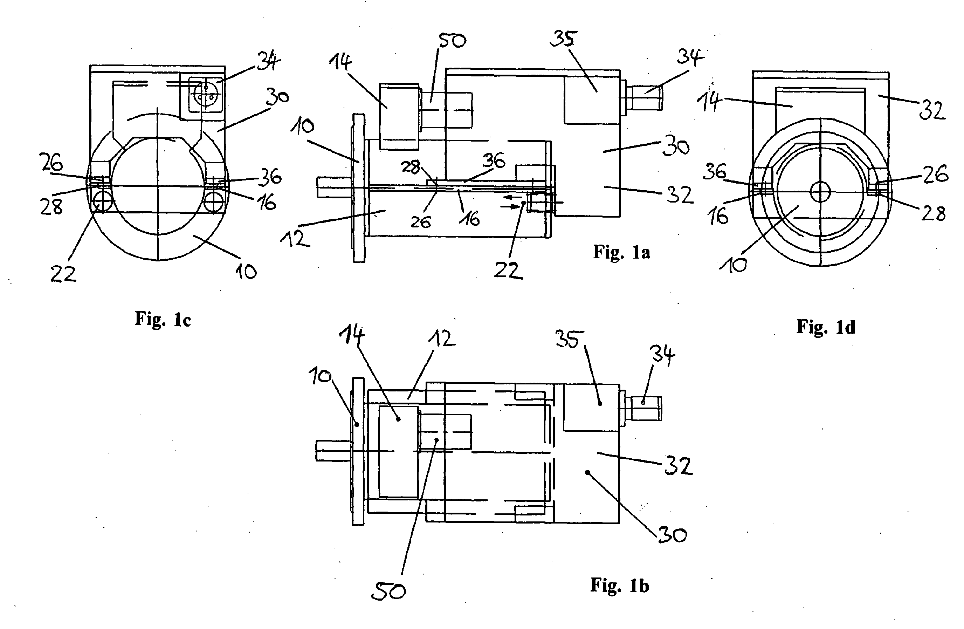

Wie aus den Figuren 1a bis 1d ersichtlich ist, umfasst die Motor-Schaltgerät-Anordnung einen Motor 10, der in einem Gehäuse 12 untergebracht ist, sowie ein Schaltgerät oder einen Umrichter 30, das/der in einem Gehäuse 32 untergebracht ist. Schaltgerät bzw. Umrichter 30 dienen unter anderem dazu, den Motor ein- und auszuschalten und/oder zu steuern und/oder in seiner Drehzahl zu regeln.

Beide Gehäuseteile weisen geeignete Einrichtungen auf, über die die Gehäuse 12, 32 mechanisch aneinander anbringbar sind und miteinander befestigt werden können. Das Schaltgerätgehäuse 32 ist so ausgebildet, dass es auf das Motorgehäuse 12 aufgesetzt werden kann. Insbesondere weist das Motorgehäuse 12 eine Trägervorrichtung 16 auf, beispielsweise in Form von Rippen oder Ansatzflächen, auf die entsprechend ausgebildete Gegenflächen 36 des Schaltgerätgehäuses 32 aufgesetzt werden. Die Rippen oder Ansatzflächen 16 an dem Motorgehäuse 12 bilden somit insbesondere ein Gegenlager für die entsprechenden Gegen- oder Ansatzflächen 36 an dem Schaltgerätgehäuse 32. Die Trägervorrichtung 16 an dem Motorgehäuse 12 kann in geeigneter Weise auch in Form von Schienen ausgebildet sein, auf die das Schaltgerätgehäuse 32 von der Seite her aufschiebbar ist. Diese Träger- und Lagereinrichtungen können in geeigneter Weise komplementäre, miteinander fluchtende Bohrungen 26 aufweisen, in die Schrauben 28 eingreifen. Auf diese Weise werden die beiden Gehäuse 12 und 32 mechanisch miteinander verbunden und unverrückbar fixiert.

Alternativ zu der in den Figuren 1a bis 1d dargestellten Ausführungsform können die Trägervorrichtung 16 an dem Motorgehäuse 12 und die entsprechende Gegenlagervorrichtung 36 an dem Schaltgerätgehäuse 32 so ausgebildet sein, dass das Schaltgerätgehäuse 32 im Wesentlichen unterhalb des Motorgehäuses 12 angeordnet ist, also gewissermaßen an der Trägervorrichtung 16 des Motorgehäuses 12 hängt. Auch jede andere geeignete räumliche Anordnung des Motorgehäuses relativ zu dem Schaltgerätgehäuse ist denkbar.

Die elektrische Verbindung des Motors 10 mit dem Schaltgerät und/oder Umrichter 30 erfolgt über elektrische Verbindungseinrichtungen 50, die als schwimmend gelagerte Verbindungseinheit ausgebildet sind. Diese elektrische Verbindungseinheit 50 ist mit ihrem einen Ende in dem Schaltgerät 30 und mit ihrem anderen Ende in dem Motor 10 elektrisch kontaktiert. Insbesondere kann ein elektrischer Anschlusskasten 14 oder eine andere geeignete Anbau- oder Anschlußvorrichtung an dem Motor 10 vorhanden sein, mit dem/der das motorseitige Ende der Verbindungseinheit 50 kontaktiert ist. In vergleichbarer Weise kann auch das Schaltgerätgehäuse eine geeignete Anbau- oder Anschlußvorrichtung für eine elektrische Kontaktierung des Schaltgerät-seitigen Endes der Verbindungseinheit 50 aufweisen.

Das Schaltgerät 30 weist für seine elektrische Versorgung einen Kabeleinführungsanschluss oder Steckverbinder 34 und/oder einen elektrischen Anschlussraum 35 auf. Sowohl der Motor 10 als auch das Schaltgerät/Umrichter 30 können luft- und/oder wassergekühlt sein. Dafür sind geeignete Kühlwasser- und/oder Kühlluftanschlüsse 22 vorgesehen. Die Kühlwasser kreisläufe in dem Motorgehäuse 12 und dem Schaltgerätgehäuse 32 können dabei sowohl parallel als auch in Reihe zueinander betrieben werden.

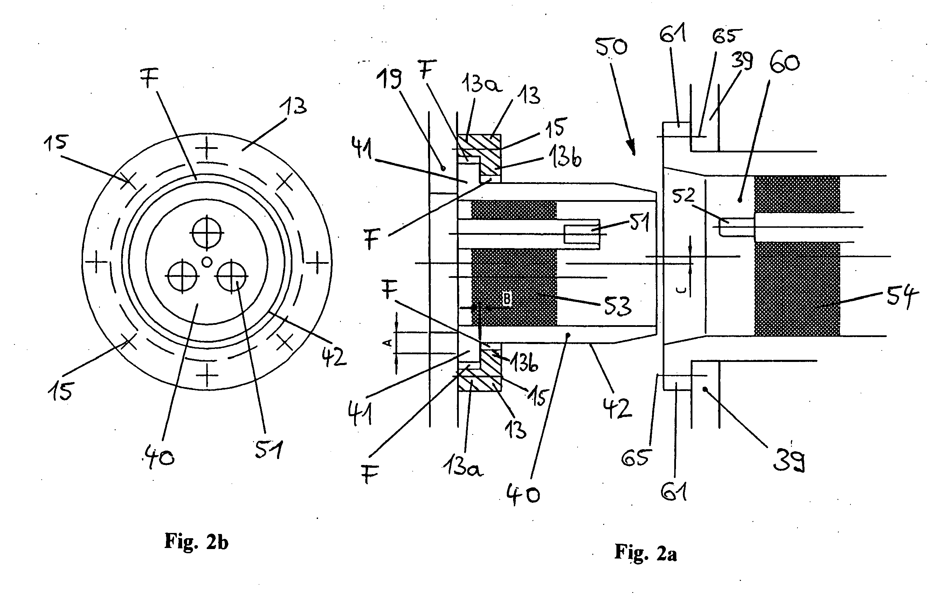

Die elektrische Verbindungseinheit 50 ist im Detail und in vergrößerter Darstellung in den Figuren 2a und 2b gezeigt, auf die nachfolgend Bezug genommen wird. Die Verbindungseinheit 50 ist typischerweise eine Steckverbindungseinheit oder Kabeldurchführungseinheit. Sie besteht dabei aus einem ersten Teil oder Unterteil 40 und einem zu diesem ersten Teil passenden zweiten Teil oder Oberteil 60. Zur Herstellung der elektrischen Verbindung wird das Unterteil 40 in das Oberteil 60 eingeschoben, wobei in an sich bekannter Art und Weise im Innenraum der beiden Teile 40 und 60 mittels elektrischer Stifte und Buchsen 51 und 52 ein elektrischer Kontakt hergestellt wird. Wie aus Fig. 2b ersichtlich ist, können die Kontaktbuchsen und -stifte in den beiden Verbinderteilen 40, 60 beispielsweise im Falle eines Drehstrommotors um 120° zueinander versetzt angeordnet sein. Des Weiteren weisen das Unterteil 40 und das Oberteil 60 in an sich bekannter Art und Weise im Inneren ein Vergussmaterial 53, 54 auf, das beispielsweise aus einem geeigneten Kunststoff besteht und als Isolator und für eine zentrierte Halterung des Unterteils 40 in dem Oberteil 60 dient.

Die elektrische Verbindungseinheit 50 ist als einseitig schwimmend gelagerte Verbindungseinheit ausgeführt. In Fig. 2a ist die schwimmende Lagerung am linken Ende, d.h. im Bereich des Bodens des Unterteils 40 ausgebildet, wo das Unterteil 40 mit einem Flansch 19 an dem Anschlusskasten 14 des Motors 10 verbunden ist. Zu diesem Zweck weist das Unterteil 40 einen sich radial erstreckenden Ansatz oder Rand 41 auf, der in eine Halterung 13 eingreift, die im Wesentlichen an dem Motorgehäuse 12 angebracht ist. In der Ausführungsform gemäß Fig. 2a ist die Halterung 13 an einem Flansch 19 des Anschlusskastens 14 des Motors 10 angebracht. Anstelle des Anschlusskastens 14 kann aber auch das Motorgehäuse 12 in geeigneter Weise derart ausgebildet sein, dass das Unterteil 40 der Verbindungseinheit 50 direkt in eine geeignete Öffnung oder Anschlussstelle des Motorgehäuses 12 eingreift.

Bei der in Fig. 2a dargestellten Ausführungsform ist die Halterung 13 für den Rand 41 des Unterteils 40 klauenartig ausgebildet, wobei sie einen axial verlaufenden Schenkel 13a und einen radial verlaufenden Schenkel 13b aufweist. Der Rand 41 ist somit im wesentlichen parallel zu dem radial verlaufenden Schenkel 13b der Halterung 13 ausgerichtet und greift unter diesen Schenkel 13b. Die Halterung 13 kann beispielsweise mittels Schrauben 15 an dem Flansch 19 befestigt sein.

Die Verbindungseinheit 50 ist kreissymmetrisch ausgebildet, wobei der untere Rand 41 des Unterteils 40 ringförmig am Boden des Unterteils 40 umläuft. Die Halterung 13 für den Rand 41 ist ebenfalls kreisförmig ausgebildet, wobei der Innenradius des axialen Schenkels 13a der Halterung 13 größer ist als der Außenradius des Rands 41, und wobei der Innenradius des sich radial erstreckenden Schenkels 13b der Halterung 13 größer ist als der Außenradius der zylinderförmigen Wand 42 des Unterteils 40. Damit verbleibt zwischen dem seitlichen Ende des Rands 41 des Unterteils 40 und dem axial verlaufenden Schenkel 13a der Halterung 13 sowie zwischen der Wand 42 des Unterteils 40 und dem seitlichen Ende des radial verlaufenden Schenkels 13b der Halterung 13 jeweils ein Freiraum F. Dieser Freiraum F ermöglicht eine Bewegung des Unterteils 40 in allen radialen Richtungen oder Freiheitsgraden, so dass das Unterteil 40 mittels seines Rands 41 in der Halterung 13 gedreht und/oder radial verschoben werden kann. Eine Bewegung des Unterteils 40 in axialer Richtung ist auf Grund der radialen Schenkel 13b der Halterung 13 im Wesentlichen nicht möglich.

Eine Rotation des Unterteils 40 gestattet eine Ausrichtung der Kontaktbuchsen und -stifte 51, 52 des Unterteils 40 und des Oberteils 60, so dass diese ineinander eingeführt werden können und ein elektrischer Kontakt hergestellt wird. Eine radiale Verschiebung des Unterteils 40 innerhalb der durch die Freiräume F geschaffenen Bewegungsmöglichkeiten gestattet eine radiale Ausrichtung des Unterteils 40 zu dem Oberteil 60 so, dass die im nicht zusammengefügten Zustand möglicherweise gegebene diametrale Abweichung C der Achsen von Unterteil und Oberteil beseitigt wird, d.h. dass die Achsen miteinander fluchten, womit das Unterteil 40 in das Oberteil 60 eingeschoben werden kann.

Bei der in Fig. 2a gezeigten Ausführungsform ist das zweite Teil oder Oberteil 60 der Verbindungseinheit 50 unbeweglich, feststehend an dem Schaltgerätgehäuse 32 oder im Bereich des Schaltgerätgehäuses 32 angebracht. Das Oberteil 60 weist dafür einen sich radial erstreckenden Rand 61 auf, der beispielsweise mittels Schrauben 65 an einem Flansch 39 des Schaltgerätgehäuses 32 befestigt ist.

Alternativ zu der in Fig. 2a dargestellten Ausführungsform kann das Oberteil 60 der elektrischen Verbindungseinheit 50 schwimmend an dem Schaltgerätgehäuse 32 bzw. dem Flansch 39 gelagert sein, wobei dann das Unterteil 40 feststehend an dem Motorgehäuse 12 bzw. dem Flansch 19 angebracht ist. Hierfür gilt in einer mechanischen Umkehr sinngemäß das Gleiche, wie oben für die schwimmende Lagerung des Unterteils 40 ausgeführt wurde.

Die einseitig schwimmend gelagerte Verbindungseinheit 50 ist explosionsgeschützt ausgeführt. Dazu ist insbesondere zwischen dem Rand 41 des Unterteils 40 und der Halterung 13 im Bereich der aufeinander gleitenden Flächen des Rands 41 und der Halterung 13 ein Spalt vorgesehen, der gemäß der einschlägigen Vorschriften des Explosionsschutzes bestimmte Mindestmaße aufweist. Diese Mindestmaße dürfen nicht unterschritten werden, damit im Falle einer Explosion kein Zünddurchschlag erfolgen kann. In Fig. 2a ist die diesbezügliche Länge des Spalts mit A und die diesbezügliche Weite des Spalts mit B gekennzeichnet. Die Spaltlänge A und die Spaltweite B sind dabei so bemessen, dass vorschriftengemäß ein Explosionsschutz gewährleistet ist.

## Patentansprüche

1. Motor-Schaltgerät-Anordnung für einen Einsatz in explosionsgefährdeten Bereichen, insbesondere in schlagwettergefährdeter Atmosphäre, insbesondere im Bergbau unter Tage, mit
- einem in einem Gehäuse (12) angeordneten Motor (10),
- einem in einem Gehäuse (32) angeordneten Schaltgerät (30) und/oder Umrichter (30) zum Steuern des Motors (10), und
- Mitteln (50) für eine elektrische Verbindung des Motors (10) mit dem Schaltgerät (30) und/oder Umrichter (30),
- wobei das Motorgehäuse (12) und das Schaltgerät-/Umrichtergehäuse (32) jeweils Einrichtungen (16, 36; 26, 28) für eine lösbare Verbindung der beiden Gehäuse (12, 32) mit-einander aufweisen,
**dadurch gekennzeichnet,**
**dass** die elektrischen Verbindungsmittel eine schwimmend gelagerte Verbindungseinheit (50) aufweisen, wobei ein Spalt (A, B) zwischen den die schwimmende Lagerung bildenden Komponenten (40, 41; 19, 13) der Verbindungseinheit (50) und der Gehäuse (12; 32) derart verbleibt, dass die Verbindungseinheit (50) explosionsgeschützt ausgeführt ist.

2. Motor-Schaltgerät-Anordnung nach Anspruch 1, **dadurch gekennzeichnet, dass** die schwimmend gelagerte Verbindungseinheit (50) die Zündschutzart "Druckfeste Kapselung" (Kennzeichnung "EEx d") aufweist, wobei der Spalt (A, B) einen druckfesten Abschluss bildet, um einen Zünddurchschlag zu verhindern.

3. Motor-Schaltgerät-Anordnung nach Anspruch 1 oder 2, **dadurch gekennzeichnet, dass** der Spalt eine für die explosionsgeschützte Ausführung erforderliche Spaltlänge (A) und Spaltweite (B) aufweist.

4. Motor-Schaltgerät-Anordnung nach einem der Ansprüche 1 bis 3, **dadurch gekennzeichnet, dass** die schwimmend gelagerte Verbindungseinheit (50) eine einseitig schwimmend gelagerte Verbindungseinheit ist.

5. Motor-Schaltgerät-Anordnung nach Anspruch 4, **dadurch gekennzeichnet, dass** ein erstes Teil (40; 60) der Verbindungseinheit (50) schwimmend an einem der Gehäuse (12; 32) gelagert ist, indem ein Rand (41) des ersten Teils (40; 60) in eine Halterung (13) an dem Gehäuse (12; 32) eingreift, und dass ein zweites Teil (60; 40) der Verbindungseinheit (50) feststehend an dem anderen der Gehäuse (32; 12) angebracht ist.

6. Motor-Schaltgerät-Anordnung nach Anspruch 5, **dadurch gekennzeichnet, dass** der Spalt (A, B) zwischen dem Rand (41) des ersten Teils (40; 60) der Verbindungseinheit (50) und der Halterung (13) an dem Gehäuse (12; 32) besteht.

7. Motor-Schaltgerät-Anordnung nach einem der Ansprüche 1 bis 3, **dadurch gekennzeichnet, dass** die schwimmend gelagerte Verbindungseinheit (50) eine zweiseitig schwimmend gelagerte Verbindungseinheit ist.

8. Motor-Schaltgerät-Anordnung nach Anspruch 7, **dadurch gekennzeichnet, dass** ein erstes Teil (40) der Verbindungseinheit (50) schwimmend an einem der Gehäuse (12) gelagert ist, indem ein Rand (41) des ersten Teils (40) in eine Halterung (13) an dem Gehäuse (12) eingreift, und dass ein zweites Teil (60) der Verbindungseinheit (50) schwimmend an dem anderen der Gehäuse (32) gelagert ist, indem ein Rand des zweiten Teils (60) in ein Halterung an dem anderen Gehäuse (32) eingreift.

9. Motor-Schaltgerät-Anordnung nach Anspruch 8, **dadurch gekennzeichnet, dass** ein Spalt (A, B) zwischen dem Rand (41) des ersten Teils (40) der Verbindungseinheit (50) und der Halterung (13) an dem Gehäuse (12) besteht, und dass ein Spalt (A, B) zwischen dem Rand des zweiten Teils (60) der Verbindungseinheit (50) und der Halterung an dem Gehäuse (32) besteht.

10. Motor-Schaltgerät-Anordnung nach einem der vorhergehenden Ansprüche, **dadurch gekennzeichnet, dass** die schwimmend gelagerte Verbindungseinheit (50) eine Steckverbindungseinheit oder eine Kabeldurchführungseinheit ist.

11. Motor-Schaltgerät-Anordnung nach einem der vorhergehenden Ansprüche, **dadurch gekennzeichnet, dass** das Motorgehäuse (12) eine Trägervorrichtung (16) für das Schaltgerät-/Umrichtergehäuse (32) aufweist, und dass das Schaltgerät-/Umrichtergehäuse (32) derart ausgebildet ist, dass es an der Trägervorrichtung (16) anbringbar ist.

12. Motor-Schaltgerät-Anordnung nach Anspruch 11, **dadurch gekennzeichnet, dass** das Schaltgerät-/Umrichtergehäuse (32) derart ausgebildet ist, dass es auf die Trägervorrichtung (16) aufsetzbar ist.

13. Motor-Schaltgerät-Anordnung nach einem der vorhergehenden Ansprüche, **dadurch gekennzeichnet, dass** das Motorgehäuse (12) und das Schaltgerät-/Umrichtergehäuse (32) Einrichtungen (26, 28) für eine Verschraubung der beiden Gehäuse (12, 32) miteinander aufweisen.

14. Motor-Schaltgerät-Anordnung nach einem der vorhergehenden Ansprüche, **dadurch gekennzeichnet, dass** das Schaltgerät-/Umrichtergehäuse (32) und das Motorgehäuse (12) derart ausgebildet sind, dass das Schaltgerät-/Umrichtergehäuse (32) auf das Motorgehäuse (12) aufschiebbar ist, wobei das erste Teil (40) und das zweite Teil (60) der elektrischen Verbindungseinheit (50) ineinander eingreifen, insbesondere ineinander eingeschoben werden, wenn das Schaltgerät-/Umrichtergehäuse (32) auf das Motorgehäuse (12) aufgeschoben wird.

15. Motor-Schaltgerät-Anordnung nach einem der vorhergehenden Ansprüche, **dadurch gekennzeichnet, dass** der Motor (10) und/oder das Schaltgerät (30) und/oder der Umrichter (30) Vorrichtungen (22) für eine Luftkühlung und/oder eine Wasserkühlung aufweisen.

16. Motor-Schaltgerät-Anordnung nach einem der vorhergehenden Ansprüche, **dadurch gekennzeichnet, dass** sie explosionsgeschützt ausgeführt ist, wobei sie insbesondere die Zündschutzart "Druckfeste Kapselung" (Kennzeichnung "EEx d") aufweist.

## Claims

1. Motor/switching unit arrangement for use in areas subject to explosion hazards, in particular in atmospheres which are subject to firedamp, in particular in underground mining, having
- a motor (10) which is arranged in a housing (12),
- a switching unit (30) and/or converter (30), which is arranged in a housing (32), for controlling the motor (10), and
- means (50) for electrically connecting the motor (10) to the switching unit (30) and/or converter (30),
- with the motor housing (12) and the switching unit/converter housing (32) each having devices (16, 36; 26, 28) for connecting the two housings (12, 32) to one another in a detachable manner,
**characterized**
**in that** the electrical connecting means have a connecting unit (50) which is mounted in a floating manner, with a gap (A, B) remaining between those components (40, 41; 19, 13) of the connecting unit (50) which form the floating bearing and the housing (12; 32) in such a way that the connecting unit (50) is designed to be explosion-proof.

2. Motor/switching unit arrangement according to Claim 1, **characterized in that** the connecting unit (50) which is mounted in a floating manner is of the "flameproof enclosure" ignition protection type (designation "EEx d"), with the gap (A, B) forming a pressure-resistant closure in order to prevent flashback.

3. Motor/switching unit arrangement according to Claim 1 or 2, **characterized in that** the gap has a gap length (A) and gap width (B) which are required for the explosion-proof design.

4. Motor/switching unit arrangement according to one of Claims 1 to 3, **characterized in that** the connecting unit (50) which is mounted in a floating manner is a connecting unit which is mounted in a floating manner on one side.

5. Motor/switching unit arrangement according to Claim 4, **characterized in that** a first part (40; 60) of the connecting unit (50) is mounted in a floating manner on one of the housings (12; 32) by one edge (41) of the first part (40; 60) engaging in a holder (13) on the housing (12; 32), and **in that** a second part (60; 40) of the connecting unit (50) is fitted to the other of the housings (32; 12) in a stationary manner.

6. Motor/switching unit arrangement according to Claim 5, **characterized in that** the gap (A, B) is present between the edge (41) of the first part (40; 60) of the connecting unit (50) and the holder (13) on the housing (12; 32).

7. Motor/switching unit arrangement according to one of Claims 1 to 3, **characterized in that** the connecting unit (50) which is mounted in a floating manner is a connecting unit which is mounted in a floating manner on two sides.

8. Motor/switching unit arrangement according to Claim 7, **characterized in that** a first part (40) of the connecting unit (50) is mounted on one of the housings (12) in a floating manner by one edge (41) of the first part (40) engaging in a holder (13) on the housing (12), and **in that** a second part (60) of the connecting unit (50) is mounted on the other of the housings (32) in a floating manner by one edge of the second part (60) engaging in a holder on the other housing (32).

9. Motor/switching unit arrangement according to Claim 8, **characterized in that** a gap (A, B) is present between the edge (41) of the first part (40) of the connecting unit (50) and the holder (13) on the housing (12), and **in that** a gap (A, B) is present between the edge of the second part (60) of the connecting unit (50) and the holder on the housing (32).

10. Motor/switching unit arrangement according to one of the preceding claims, **characterized in that** the connecting unit (50) which is mounted in a floating manner is a plug-type connecting unit or a cable bushing unit.

11. Motor/switching unit arrangement according to one of the preceding claims, **characterized in that** the motor housing (12) has a carrier apparatus (16) for the switching unit/converter housing (32), and **in that** the switching unit/converter housing (32) is designed in such a way that it can be fitted to the carrier apparatus (16).

12. Motor/switching unit arrangement according to Claim 11, **characterized in that** the switching unit/converter housing (32) is designed in such a way that it can be placed on the carrier apparatus (16).

13. Motor/switching unit arrangement according to one of the preceding claims, **characterized in that** the motor housing (12) and the switching unit/converter housing (32) have devices (26, 28) for screw-connecting the two housings (12, 32) to one another.

14. Motor/switching unit arrangement according to one of the preceding claims, **characterized in that** the switching unit/converter housing (32) and the motor housing (12) are designed in such a way that the switching unit/converter housing (32) can be pushed onto the motor housing (12), with the first part (40) and the second part (60) of the electrical connecting unit (50) engaging one in the other, in particular being inserted one into the other when the switching unit/converter housing (32) is pushed onto the motor housing (12).

15. Motor/switching unit arrangement according to one of the preceding claims, **characterized in that** the motor (10) and/or the switching unit (30) and/or the converter (30) have air-cooling and/or water-cooling apparatuses (22).

16. Motor/switching unit arrangement according to one of the preceding claims, **characterized in that** it is designed to be explosion-proof and, in particular, is of the "flameproof enclosure" ignition protection type (designation "EEx d").

## Revendications

1. Agencement moteur - appareil de commutation destiné à une utilisation dans des zones exposées à des risques d'explosion, en particulier dans une atmosphère exposée à des risques de grisou, en particulier dans l'exploitation minière souterraine, comprenant,
- un moteur (10) disposé dans un carter (12),
- un appareil de commutation (30) et/ou un convertisseur (30), disposé dans un carter (32), pour la commande du moteur (10), et
- des moyens (50) pour une liaison électrique entre le moteur (10) et l'appareil de commutation (30) et/ou le convertisseur (30),
- le carter de moteur (12) et le carter d'appareil de commutation/convertisseur (32) présentant respectivement des dispositifs (16, 36 ; 26, 28) pour une liaison amovible entre les deux carters (12, 32),
**caractérisé en ce que**
les moyens de liaison électriques présentent une unité de liaison (50) logée de façon flottante, une fente (A, B) restant entre les composants, (40, 41 ; 19, 13) formant le logement flottant, de l'unité de liaison (50) et les carters (12 ; 32) de telle sorte que l'unité de liaison (50) est réalisée de façon antidéflagrante.

2. Agencement moteur - appareil de commutation selon la revendication 1, **caractérisé en ce que** l'unité de liaison (50) logée de façon flottante présente le type de protection "encapsulage résistant à la pression" (marquage "EEx d"), la fente (A, B) formant une terminaison résistante à la pression pour empêcher un claquage d'allumage.

3. Agencement moteur - appareil de commutation selon la revendication 1 ou 2, **caractérisé en ce que** la fente présente une longueur de fente (A) et une largeur de fente (B) nécessaires pour une réalisation antidéflagrante.

4. Agencement moteur - appareil de commutation selon l'une quelconque des revendications 1 à 3, **caractérisé en ce que** l'unité de liaison (50) logée de façon flottante est une unité de liaison logée de façon flottante sur un côté.

5. Agencement moteur - appareil de commutation selon la revendication 4, **caractérisé en ce qu'**une première partie (40 ; 60) de l'unité de liaison (50) est logée de façon flottante sur l'un des carters (12 ; 32) du fait qu'un bord (41) de la première partie (40 ; 60) s'engage dans une fixation (13) sur le carter (12, 32), et **en ce qu'**une seconde partie (60 ; 40) de l'unité de liaison (50) est placée fixement sur l'autre des carters (32 ; 12).

6. Agencement moteur - appareil de commutation selon la revendication 5, **caractérisé en ce que** la fente (A, B) entre le bord (41) de la première partie (40 ; 60) de l'unité de liaison (50) et la fixation (13) est présente sur le carter (12 ; 32).

7. Agencement moteur - appareil de commutation selon l'une quelconque des revendications 1 à 3, **caractérisé en ce que** l'unité de liaison (50) logée de façon flottante est une unité de liaison logée de façon flottante sur deux côtés.

8. Agencement moteur - appareil de commutation selon la revendication 7, **caractérisé en ce qu'**une première partie (40) de l'unité de liaison (50) est logée de façon flottante sur l'un des carters (12) du fait qu'un bord (41) de la première partie (40) s'engage dans une fixation (13) sur le carter (12), et **en ce qu'**une seconde partie (60) de l'unité de liaison (50) est logée de façon flottante sur l'autre des carters (32) du fait qu'un bord de la seconde partie (60) s'engage dans une fixation sur l'autre carter (32).

9. Agencement moteur - appareil de commutation selon la revendication 8, **caractérisé en ce qu'**une fente (A, B) entre le bord (41) de la première partie (40) de l'unité de liaison (50) et la fixation (13) est présente sur le carter (12) et **en ce qu'**une fente (A, B) entre le bord de la seconde partie (60) de l'unité de liaison (50) et la fixation est présente sur le carter (32).

10. Agencement moteur - appareil de commutation selon l'une quelconque des revendications précédentes, **caractérisé en ce que** l'unité de liaison (50) logée de façon flottante est une unité de liaison par enfichage ou une unité de passage de câbles.

11. Agencement moteur - appareil de commutation selon l'une quelconque des revendications précédentes, **caractérisé en ce que** le carter de moteur (12) présente un dispositif support (16) pour le carter d'appareil de commutation/convertisseur (32), et **en ce que** le carter d'appareil de commutation/convertisseur (32) est conçu de telle sorte qu'il peut être placé sur le dispositif support (16).

12. Agencement moteur - appareil de commutation selon la revendication 11, **caractérisé en ce que** le carter d'appareil de commutation/convertisseur (32) est conçu de telle sorte qu'il peut être posé sur le dispositif support (16).

13. Agencement moteur - appareil de commutation selon l'une quelconque des revendications précédentes, **caractérisé en ce que** le carter de moteur (12) et le carter d'appareil de commutation/convertisseur (32) présentent des dispositifs (26, 28) pour un assemblage vissé des deux carters (12, 32) entre eux.

14. Agencement moteur - appareil de commutation selon l'une quelconque des revendications précédentes, **caractérisé en ce que** le carter d'appareil de commutation/convertisseur (32) et le carter de moteur (12) sont conçus de telle sorte que le carter d'appareil de commutation/convertisseur (32) peut être enfilé sur le carter de moteur (12), la première partie (40) et la seconde partie (60) de l'unité de liaison (50) électrique s'engageant l'une dans l'autre, en particulier étant introduite l'une dans l'autre lorsque le carter d'appareil de commutation/convertisseur (32) est enfilé sur le carter de moteur (12).

15. Agencement moteur - appareil de commutation selon l'une quelconque des revendications précédentes, **caractérisé en ce que** le moteur (10) et/ ou l'appareil de commutation (30) et/ ou le convertisseur (30) présentent des dispositifs (22) pour un refroidissement par air et/ ou un refroidissement par eau.

16. Agencement moteur - appareil de commutation selon l'une quelconque des revendications précédentes, **caractérisé en ce qu'**il est réalisé dans une version antidéflagrante, sachant qu'il présente en particulier la protection "encapsulage résistant à la pression" (marquage "EEx d").
